# EUROPEAN PATENT SPECIFICATION

(11) **EP 2 059 079 B1**
(45) Date of publication and mention of the grant of the patent: **23.03.2011**
(21) Application number: 08168299.9
(22) Date of filing: 04.11.2008
(51) Int. Cl.: H04W 36/14

(54) **Network switching method and apparatus of mobile terminal**
Netzwerkumschaltverfahren und Vorrichtung für ein mobiles Endgerät
Procédé de commutation de réseau et appareil pour terminal mobile

(30) Priority: 08.11.2007 KR 20070113936
(43) Date of publication of application: 13.05.2009
(73) Proprietor: Samsung Electronics Co., Ltd., Suwon-si 442-742 Gyeonggi-do (KR)
(72) Inventor: Jung, Jae Dong c/o Samsung Electronics Co., Ltd, Gyeonggi-do (KR)
(74) Representative: Jenkins, Richard Gavin

(56) References cited:
- WO-A-02/093955
- WO-A-2006/107104
- US-A1- 2004 192 211
- US-A1- 2005 059 400
- US-A1- 2007 115 899
- US-A1- 2007 249 291

## Description

### BACKGROUND OF THE INVENTION

### 1. Field of the Invention:

The present invention relates to a portable Internet access service. More particularly, the present invention relates to a network switching method and apparatus of a mobile terminal that enables the mobile terminal to switch between private and public networks for portable Internet access.

### 2. Description of the Related Art:

The portable Internet access service is a form of Internet access service provided via a wireless network. In general, wireless Internet access has been provided via a Wireless Local Area Network (WLAN) based on a wireless technology such as Wireless Fidelity (Wi-Fi). The WLAN is comprised of a fixed Access Point (AP) bridging between a wired network and fixed or mobile terminals located within the transmission range of the AP. However, the WLAN has a limited coverage area and does not support high-speed mobility. Developments in portable internet access technologies have enabled broadband Internet access with seamless high-speed mobility.

The portable Internet access service enables a subscriber to access the Internet via a portable device registered with a specific service provider. The Internet access networks can be classified into private and public networks. The public networks can be accessed and shared by different users, including both businesses and private individuals, satisfying specific conditions such as payment contract. In contrast, private networks are used exclusively by members of a single organization, institution, or business. Typically, a specific private network is allowed to be used via a terminal having authentication information installed by the organization, institution, or business. Due to the different authentication mechanisms, a user is required to carry two different terminals in order to use both the private and public networks.

Accordingly, it is required for the user to carry two different mobile terminals in order to use the private and public networks selectively, resulting in user inconvenience. Furthermore, when the user receiving a communication service via the public network moves into a coverage area in which the private and public networks overlap each other, the user has no chance to switch to the less expensive private network without breaking the connection via the public network and reestablishing a new network connection via the private network, thereby reducing utilization of the portable Internet service and wasting money. Accordingly, there has been a need to develop a network switching method of a mobile terminal that facilitates switching between public and private networks for the portable Internet access service.

W02006/107104 discloses a method involving a mobile device discovery and use of target wireless networks which are at least partly within a coverage area of another wireless network which provides location information which includes acquiring data from a plurality of said target wireless networks, acquiring location information from said another wireless network, mapping said data from said plurality of said target wireless networks with said location information and selecting one of said plurality of target wireless networks based on said mapped data.

US2007/0115899 discloses a method, apparatus, and system architecture for performing handovers between heterogeneous wireless networks. While receiving wireless service from a base station for a first wireless network, a mobile subscriber station device roams within range of one or more access points corresponding to a second wireless network. The mobile subscriber station obtains parameters for each access point quantifying the wireless service available via that access point. The parameters are employed as inputs to a handover decision algorithm to determine if a handover of service from the first wireless network to an access point for the second wireless network is to be performed. In one embodiment, the handover decision algorithm is effected via a fuzzy logic controller that is implemented via execution of software on the mobile subscriber station.

### SUMMARY OF THE INVENTION

An aspect of the present invention is to address at least the above-mentioned problems and/or disadvantages and to provide at least the advantages described below. Accordingly, an aspect of the present invention is to provide a network switching method and apparatus of a mobile terminal that is capable of switching between private and public networks.

In accordance with an aspect of the present invention, a network switching method of a mobile terminal is provided. The method includes determining, at a mobile terminal connected with a public network which requires no authentication, whether a signal strength of a signal received from a first public base station of the public network is less than a first threshold value;
characterised in that when the signal strength is less than the first threshold value, and there is no other public base station with a signal strength that is greater than that of the first public station, the method further comprises determining whether to switch to a private network which requires authentication, with reference to previously stored public and private network information; and
establishing, after determining to switch to a private network, a connection with a private base station of the private network using an authentication value included in the private network information,
wherein establishing of the connection with the private base station comprises:
releasing the connection with the public base station;
performing authentication with the private network using the authentication value; and
establishing a connection with the private base station.

The network switching method may further include receiving neighbor base station information periodically broadcasted by the private base station, determining whether a signal strength of a signal received from the private base station is less than a defined threshold value with reference to the neighbor base station information, and establishing, when the signal strength is less than the threshold value, a connection with a neighbor base station having a received signal strength greater than received signal strengths of other neighbor base stations.

The network switching method may further include determining whether a signal strength of a signal received from a private base station of a private network to which the mobile terminal switched to is less than a threshold value, determining, when the signal strength of the signal received from the private base station is less than the threshold value, whether to switch public network, and establishing, after determining to switch to the public network, a connection with a neighbor public base station of the public network having a received signal strength greater than received signal strengths of other neighbor public base stations with reference to the neighbor base station information.

In accordance with another aspect of the present invention, a network switching apparatus of a mobile terminal is provided. The apparatus includes a connection manager for managing information on a public network requiring no authentication and a private network requiring authentication, mappings between at least one public base station of the public network and at least one private base station of the private network, and the authentication information; and
a control unit for determining whether a signal strength of a signal received from a first public base station that is associated with a mobile terminal, is less than
a first threshold value, for determining, when the signal strength is less than the first threshold value and there is no other public base station with a signal strength that is greater than that of the first public base station, whether to switch to a private base station mapped to the public base station, for performing authentication with the private network using the authentication value, and for releasing the connection with the public station after determining to switch to the private base station and establishing connection with the private base station.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a schematic diagram illustrating a portable Internet access system according to an exemplary embodiment of the present invention;

FIG. 2 is a block diagram illustrating a configuration of a mobile terminal according to an exemplary embodiment of the present invention.

FIG. 3 is a block diagram illustrating a configuration of a Connection Manager (CM) according to an exemplary embodiment of the present invention.

FIG. 4 is a flowchart illustrating a network switching method of a mobile terminal according to an exemplary embodiment of the present invention; and

FIG. 5 is a message flow diagram illustrating a network switching method of a mobile terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

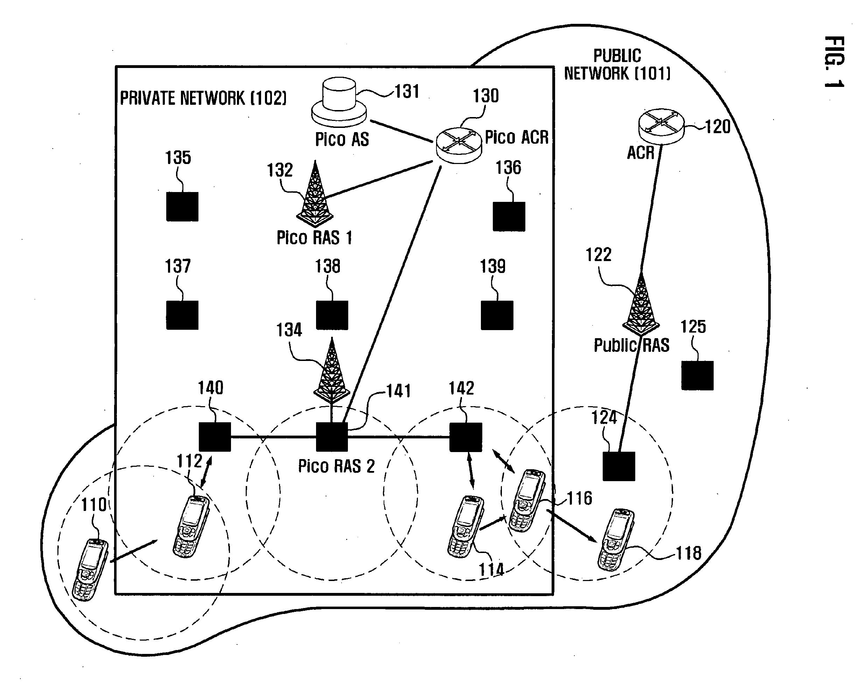

FIG. 1 is a schematic diagram illustrating a portable Internet access system according to an exemplary embodiment of the present invention. In order to help understanding exemplary embodiments of the present invention, the portable Internet access system is assumed to be a mobile network system comprised of public and private networks based on Institute of Electrical and Electronics Engineers (IEEE) 802.16 standards including Worldwide Interoperability for Microwave Access (WiMAX) and Wireless Broadband (WiBro) that are capable of providing broadband high speed Internet access services. However, the present invention is not limited to the IEEE 802.16 standards-based systems.

Referring to FIG. 1, the portable Internet access system is comprised of a public network 101 and a private network 102. The public network 101 includes an Access Control Router (ACR) 120, a public Radio Access Station (RAS) 122, and repeaters 124 and 125. The ACR 120 is connected to at least one RAS to establish an Internet Protocol (IP) network. The ACR 120 is responsible for subscriber authentication for providing high speed Internet access service and supporting mobility, Foreign Agent (FA) authentication, IP multicast function, service access control function, Quality of Service (QoS) control function, and interoperation with the RASs and Authentication, Authorization and Accounting (AAA) server (not shown). The public RAS 122 is responsible for an authentication and security function for the terminals 110, 112, 114, 116, and 118 and manages radio resources. The repeaters 124 and 125 deliver signals to the terminals located in shadow areas, i.e. outside of the radio coverage of the RAS 122.

The private network 102 is a network for providing specific services to allowed members and is typically smaller in size in comparison with the public network 101. The private network 102 includes a pico ACR 130 having similar functions as the ACR 120 of public network 101, pico RASs 132 and 134, repeaters or Base Transceiver Stations (BTSs) 135, 136, 137, 138, 139, 140, 141, and 142. The dotted line circles are pico cells defined by radio coverage areas of respective repeaters or BTSs. The private network 102 further includes a Pico Authentication Server (AS) 131 having the identity information of the terminals allowed to access the private network 102 and performs authentication for the terminals.

In this exemplary embodiment, the switching of a mobile terminal between the public and private networks is described with an example where the mobile terminal 110 associated with the public network 101 moves into the coverage area of the private network 102.

The mobile terminal 110 associated with the public network 101 outside the coverage area of the private network 102 moves into the coverage area of the private network 102. In this case, when the mobile terminal 110 which is registered with the private network 102 moves into the coverage area of the private network 102, the mobile terminal 100 releases the connection with the public network and establishes a connection with the private network 102 according to a user command or preset configuration such that the user can maintain reception of the ongoing service. When the mobile terminal 110 keeps moving so as to be positioned outside the coverage area of the private network 102 but in coverage area of the public network 101, the mobile terminal releases the connection with the private network 101 and re-establishes the connection with the public network 101. If the mobile terminal 110 moves out of the coverage area of the private network 102 without establishing connection with the public network, the connection with the private network 102 is released. An exemplary configuration of the mobile terminal 110 for switching between the private and public networks is described hereinafter.

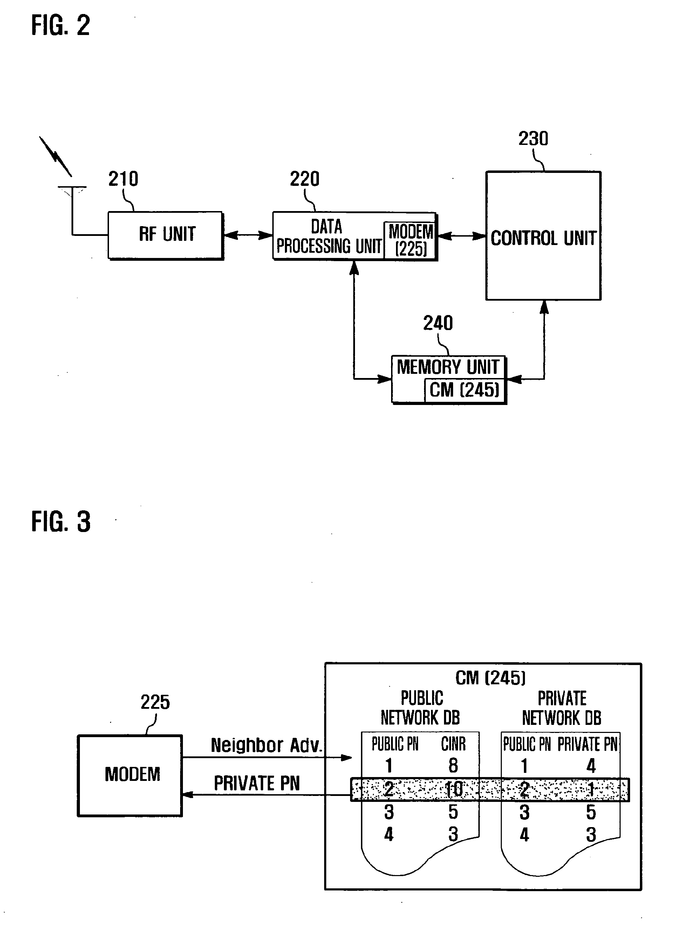

FIG. 2 is a block diagram illustrating a configuration of a mobile terminal according to an exemplary embodiment of the present invention.

Referring to FIG. 2, the mobile terminal includes a Radio Frequency (RF) unit 210, a data processing unit 220, a control unit 230, and a memory unit 240. The RF unit 210 is responsible for radio communication of the mobile terminal. The RF unit 210 includes a transmitter for up-converting and amplifying a transmission signal and a receiver for low noise amplifying and down-converting a received signal. More particularly, the RF unit 210 receives Neighbor Advertisement (NA) messages that are periodically broadcast by the RAS or repeater and transmits authentication information required for connecting to the private network. The data processing unit 220 includes a transmission part for encoding and modulating the transmission signals and a receiving part for demodulating and decoding the received signals. That is, the data processing unit 220 can be provided with a Modulator/Demodulator (MODEM) 225 and a COder/DECoder (CODEC) (not shown).

The control unit 230 controls general operations of the mobile terminal. The control unit 230 may be integrated with the data processing unit 220. More particularly, in this exemplary embodiment, the control unit 230 controls the establishment of connections to the public and private networks and switching between the public and private networks. The memory unit 240 may be divided into program and data memories. The program memory stores application programs associated with the operation of the mobile terminal. The program memory also stores base station information including Pseudo Noise (PN) codes and Carrier to Interference and Noise Ratios (CINRs) extracted from the NA messages transmitted by the RASs and/or BTSs. The memory unit 240 includes a Connection Manager (CM) 245 for managing the parameters used for the network switching between the public and private networks.

FIG. 3 is a block diagram illustrating a configuration of a CM according to an exemplary embodiment of the present invention.

Referring to FIG. 3, the modem 225 transfers the information extracted from the NA messages to the memory unit 240 such that the information is stored in the CM 245. The CM 245 is provided with a public network DataBase (DB) and a private network DB. The public network DB is provided for managing the PN codes and CINRs of the BTSs of the public network. Whenever receiving the NA message, the CM 245 updates the public network DB with the information extracted from the NA message. The mobile terminal attempts a connection to the BTS having the highest CINR with reference to the network DB. The public network DB is composed of a PN code field and a CINR value field. Referring to FIG. 3, the public network DB is illustrated with CINRs of the public BTSs indicated by PN codes 1 to 4 mapped to 8, 10, 5, and 3, respectively. Since the public BTS indicated by PN code 2 has the greatest CINR, the mobile terminal is associated with this BTS in the public network.

Although not illustrated in FIG. 3, the CM 245 may store an authentication value of the mobile terminal that allows the mobile terminal to access the private network. The authentication value can be installed at the manufacturing stage of the mobile terminal or can be provided in the form of a detachable Subscriber Identity Module (SIM). Using the authentication value, the mobile terminal can be authenticated with an authentication server for accessing the private network. The CM 245 also stores mappings of the public BTS and the private BTS to facilitate switching between the public and private networks. Referring to FIG. 3, the private network DB is illustrated with the public BTSs 1 to 4 mapped to respective private BTSs 4, 1, 5 and 3, respectively. The mappings between the public and private BTSs are established in consideration of geometrical locations of the BTSs and radio environment such that the mobile terminal optimally switches between the public and private networks. When switching from the public network to the private network, the mobile terminal selects a private BTS with reference to the mapping information. If the mobile terminal associated with the Internet via the public BTS 2 moves into the coverage area of the private network, the CINR of the BTS may decrease below a threshold value. If the CINR becomes less than the threshold value, the mobile terminal inquires whether to switch to the private network. The threshold value can be set by the network operator. Assuming that the threshold value is set to 10, the mobile terminal connected to the public network inquires the user whether to switch to the private network when the CINR is less than 10. The inquiry can be done in various manners, e.g. in the form of a popup message or the like. If a network switching is confirmed by the user, the mobile terminal releases the connection with the public BTS 2 and performs a connection establishment procedure with the private network. Since the public BTS 2 is mapped with the private BTS 1 in the private network DB of the CM 245, the mobile terminal attempts to establish a connection with the private BTS 1. After establishing the connection with the private BTS 1, the mobile terminal may receive an NA message broadcasted by the private BTS 1 to acquire information on the neighbor BTSs and perform handover to a neighbor BTS having the greatest CINR. In this manner, the mobile terminal can switch between the public and private network. A network switching method of the above structured mobile terminal is described hereinafter in more detail.

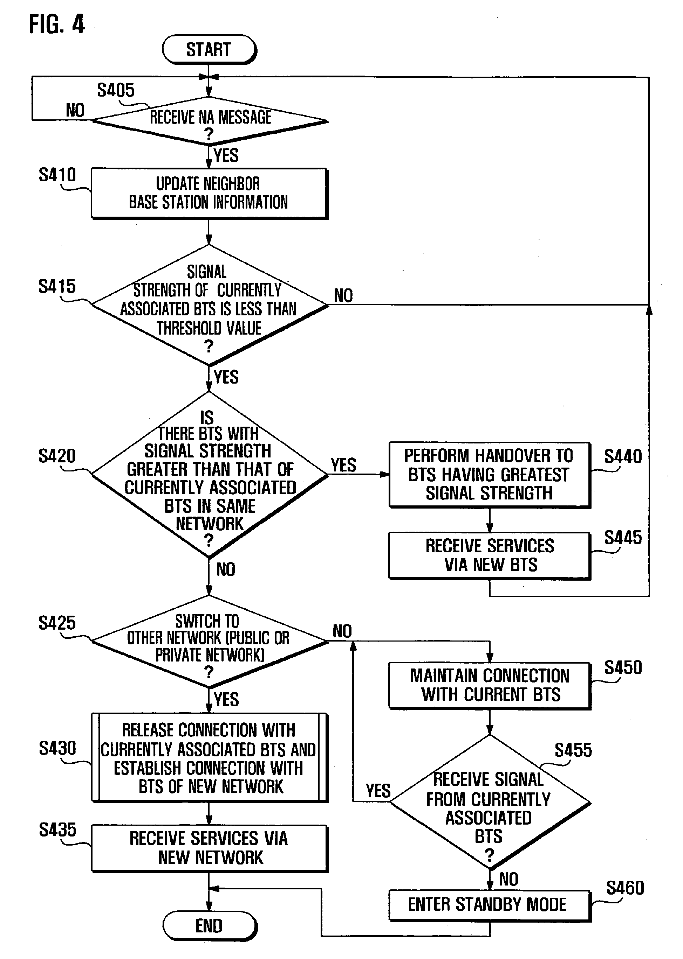

FIG. 4 is a flowchart illustrating a network switching method of a mobile terminal according to an exemplary embodiment of the present invention.

Referring to FIG. 4, the control unit 230 of the mobile terminal determines whether an NA message is received from a BTS in step S405. Here, it is assumed that the mobile terminal is connected to a BTS of the public or private network for receiving the portable Internet service. When an NA message is received, the control unit 230 extracts neighbor BTS information from the NA message and updates the stored neighbor BTS information in step S410. In the case of the public network, the neighbor BTS information is delivered to the CM 245 such that the CM 245 updates the public network DB with the new neighbor BTS information. The BTS information includes the CINR of the received signal. Unless an NA message is not received, the mobile terminal maintains the ongoing operation. Next, the control unit determines whether the CINR of the currently associated BTS is less than a threshold value in step S415. The threshold value is a reference value for determining whether to switch from the current public or private network to another network and is set by the network operator. In this exemplary embodiment, it is assumed that the same CINR threshold is used for both the inter-network switching and intra-network handover. When the CINR is greater than or equal to the threshold value, the process returns to stepS405. When the CINR is less than the threshold value, the control unit 230 determines whether there is a BTS with a CINR greater than that of the currently associated BTS in the current network in step S420. When there is a BTS with a CINR that is greater than that of the currently associated BTS in the same network, the control unit 230 performs step S440 and, otherwise, performs step S425. When there is no BTS with a CINR that is greater than that of the currently associated BTS in the same network, the control unit 230 determines whether to switch to a new network in step S425. If the currently associated BTS belongs to the public network, the new network is the private network. Otherwise, if the currently associated BTS belonged to the private network, the other network is the public network. The switching determination is done according to a user command received in response to a network switching alert message. Although it has been described that the network switching is determined according to the user's intention in this exemplary embodiment, the mobile terminal can be configured such that, when the mobile phone enters into a new network, the mobile terminal switches to the new network automatically in order to prevent the ongoing service from being broken. In addition, the mobile terminal can be configured such that, when a network switching command is input by the user, the mobile terminal performs network switching without checking the CINR level.

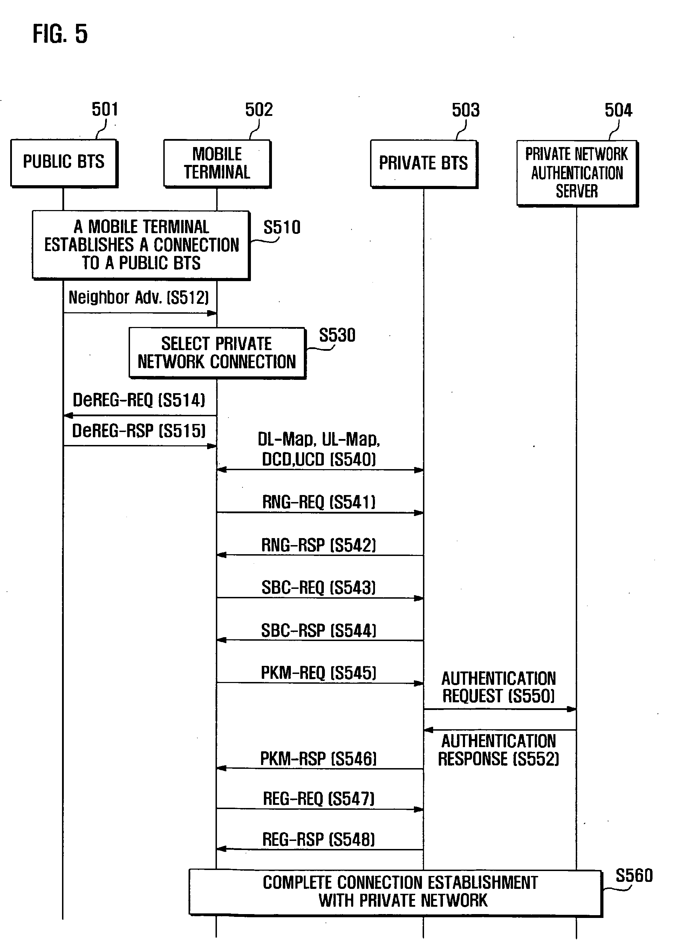

When it is determined to switch to a new network at step S425, the control unit 230 releases the connection to the current BTS and performs a connection establishment procedure with a new BTS of the new network in step S430. Here, the control unit 230 controls the modem 225 and RF unit 210 to send a connection release message to the currently associated BTS and performs the connection establishment procedure with the new BTS. The connection establishment procedure with the network BTS is described in more detail below with reference to FIG. 5. There can be two network switching scenarios, i.e. switching from the public network to the private network and switching from the private network to the public network. In the case of public-to-private network switching, the control unit 230 refers to the private network DB of the CM 245 (see FIG. 3). Referring to the example of FIG. 3, the control unit 230 controls to release the connection with the public BTS 2 and attempts to establish a connection with the private BTS 1. As described above, the mobile terminal can be authenticated with the authentication server to access the private network using the authentication value stored in the CM 245. This is the case where the mobile terminal associated with the public network area moves into the coverage area of the private network as illustrated in FIG. 1. In the case of private-to-public network switching, the control unit 230 releases the connection with the currently associated private BTS and receives an NA message broadcasted by the public network. The control unit 230 extracts neighbor BTS information from the NA message and attempts to establish a connection with a public BTS having the greatest CINR among the neighbor BTSs. This is the case where the mobile terminal crossing the private network area moves out of the coverage area of the public network as illustrated in FIG. 1. Although it is assumed that the same threshold value is used for inter-network switching and intra-network handover, different threshold values can be set for the inter-network switching and intra-network handover. After establishing the connection with the new network, the control unit 230 controls to receive the portable Internet access service via the new network in step S435.

When it is determined that there is no BTS with a CINR that is greater than that of the currently associated BTS in the same network at step S420, the control unit 230 performs a handover to a neighbor BTS with a CINR that is the greatest among the neighbor BTSs in the same network in step S440. This is the case where the mobile terminal moves into an overlapping coverage area of two BTSs. The intra-network handover is performed to the BTS with the CINR that is higher than that of the currently associated BTS to secure the stability of Internet access service via the same network. After completing the handover, the control unit 230 controls such that the mobile terminal receives the Internet access service via the new BTS in step S445 and then returns to step S405.

In the meantime, when it is determined not to switch to a new network at step S425, the control unit 230 maintains the connection to the currently associated BTS in step S450. This is the case where the mobile terminal moves around in the coverage of the same BTS. Next, the control unit 230 determines whether the signal is received from the currently associated BTS in step S455. If a signal is received from the currently associated BTS, the control unit 230 returns to step S450 to continue receiving the Internet access service. Otherwise, if no signal is received from the currently associated BTS, the control unit 230 releases the connection with the BTS and controls such that the mobile terminal enters a standby mode for the private or public network in step S460. Although it has been described in this exemplary embodiment, that the network switching is performed in accordance with the user selection, the mobile terminal can be configured to perform switching between the public and private networks automatically for preventing the network connection from being unwontedly released.

FIG. 5 is a message flow diagram illustrating a network switching method of a mobile terminal according to an exemplary embodiment of the present invention.

Referring to FIG. 5, a mobile terminal 502 establishes a connection to a public BTS 501 in step S510. After the establishment of the connection, the mobile terminal 502 receives an NA periodically broadcasted by the public BTS in step S512. The mobile terminal 502 updates the information on the neighbor public BTSs stored in the CM 245 (see FIG. 3) with reference to the received NA. Here, the mobile terminal 502 detects the CINR of the public BTS 501 and determines whether the CINR is less than a threshold value. When it is determined that the CINR of the public BTS 501 is less than the threshold value, the mobile terminal 502 outputs an alert message asking whether to switch to the public network. In this exemplary embodiment, the user inputs a network selection command in step S530. The threshold value is a reference CINR value for determining the network switching that is set by the network operator. The user's network selection process in step S530 has been described above with reference to FIG. 4. Once the network switching to the private network is determined, the mobile terminal 502 sends a Deregistration Request (DeREG_REQ) message to the public BTS 501 to release the connection to the public network in step S514. In response to the DeREG_REQ message, the public BTS 501 sends a Deregistration Response (DeREG_RSP) message to the mobile terminal in step S515. Upon receipt of the DeREG_RSP message, the mobile terminal 502 is disconnected from the public BTS 501, i.e. the public network.

After disconnection from the public network, the mobile terminal 502 performs a connection establishment procedure with a private BTS 503. The connection establishment procedure is similar to the conventional call processing procedure performed for the portable Internet access service. Referring to FIG. 5, the call processing procedure in a WiBro network is depicted as an example. The switching-target private BTS is selected with reference to the private network DB of the CM 245, i.e. a BTS mapped to the public BTS 501 in the private network DB. The mobile terminal 502 receives messages that are periodically transmitted by the private BTS 503 in step S540. The messages include information required for allocating channels in the WiBro network such as Downlink MAP (DL_MAP), Uplink MAP (UL_MAP), Downlink Channel Descript (DCD), Uplink Channel Descript (UCD) and the like. Next, in order to exchange information for establishing a connection with the private BTS 503 such as uplink synchronization, frequency, power control information and the like, the mobile terminal 502 sends a Ranging Request (RNG_REQ) message to the private BTS 503 in step S541 and receives a Ranging Response (RNG_RSP) message in response to the RNG_REQ message in step S542. Next, the mobile terminal 502 and the private BTS negotiate the basic capacity of the mobile terminal. That is, the mobile terminal 502 sends a Subscriber Station's Basic Capacity Negotiation Request (SBC_REQ) message to the private BTS 503 in step S543 and receives a Subscriber Station's Basic Capacity Negotiation Response (SBC_RSP) message in step S544. After the basic capacity negotiation, the mobile terminal 502 sends a Privacy Key Management Request (PKM_REQ) message to the public BTS 503 for requesting access authentication in step S545. Upon receipt of the PKM_REQ message, the private BTS 503 sends an authentication request message to a private network authentication server 504 for the terminal in step S550. In response to the authentication request message, the private network authentication server 504 sends an authentication response message informing whether the mobile terminal 502 is authenticated to the private BTS 503 in step S552. Upon receipt of the authentication response message, the private BTS 503 sends a Privacy Key Management Response (PKM_RSP) message generated based on the authentication result to the mobile terminal 502 in step S546. In this exemplary embodiment, it is assumed that the mobile terminal 502 is authenticated for the private network. Upon receipt of the PKM_RSP message, the mobile terminal 502 sends a Registration Request (REG_REQ) message to the private BTS 503 in step S547 and receives a Registration Response (REG_RSP) message from the private BTS 503 in response to the REG_REQ message in step S548, thereby being registered with the private network. After the mobile terminal 502 is successfully registered with the private network, the mobile terminal 502 is connected to the private BTS 503 to receive the services provided by the private network in step S560.

As described above, the network switching method of exemplary embodiments of the present invention enable a mobile terminal to connect to private and public networks such that a user can access Internet services via both the public and private networks using a single mobile terminal, thereby improving mobility and utilization of the portable Internet.

The network switching method and apparatus of exemplary embodiments of the present invention allow a user to access the Internet via public and private networks implemented with WiBro and Mobile WiMAX technologies using a single mobile terminal. In addition, the network switching method and apparatus of exemplary embodiments of the present invention allow the user to select a backhaul network to access Internet services, thereby reducing communication costs by being able to select a relatively inexpensive network, e.g. private network. Furthermore, the network switching method and apparatus of exemplary embodiments of the present invention enable cost-effective Internet access without compromising security of the private network, by using a private network authentication process.

## Claims

1. A network switching method of a mobile terminal (110), the method comprising:
determining, at a mobile terminal (110) connected with a public network (101) which requires no authentication, whether a signal strength of a signal received from a first public base station of the public network (101) is less than a first threshold value;
**characterised in that** when the signal strength is less than the first threshold value, and there is no other public base station with a signal strength that is greater than that of the first public station, the method further comprises determining whether to switch to a private network (102) which requires authentication, with reference to previously stored public (101) and private (102) network information; and
establishing, after determining to switch to a private network (102), a connection with a private base station of the private network (102) using an authentication value included in the private network (102) information,
wherein establishing of the connection with the private base station comprises:
releasing the connection with the public base station;
performing authentication with the private network (102) using the authentication value; and
establishing a connection with the private base station.

2. The method of claim 1, wherein the private base station is a base station mapped to the public base station in the private network information that includes mappings between at least one public base station and at least one private base station.

3. The method of claim 2, wherein at least a portion of a coverage area of the at least one private base station and at least a portion of a coverage area of the at least one public base station are overlapping or adjacent.

4. The method of claim 1, further comprising:
determining whether signal strength of a signal received from the private base station is less than a second threshold value with reference to neighbor base station information periodically broadcasted by the private base station;
determining, when the signal strength of the signal received from the private base station is less than the second threshold value, whether the mobile terminal is to switch to the public network (101); and
establishing, after determining switch to the public network (101), a connection with a public base station having a signal strength greater than other public base stations with reference to neighbor base station information provided by the public network.

5. The method of claim 4, wherein the switching of the connection with the public base station comprises:
releasing the connection with the private base station; and
receiving neighbor base station information broadcasted by the public network (101).

6. The method of any of claims 1 to 3, further comprising:
detecting an input of a network switching command while the mobile terminal (110) is connected with the public base station; and
switching the connection with the private base station in response to the network switching command.

7. A network switching apparatus of a mobile terminal (110), **characterised in that** the apparatus comprises:
a connection manager (245) for managing information on a public network (101) requiring no authentication and a private network (102) requiring authentication, mappings between at least one public base station of the public network (101) and at least one private base station of the private network (102), and the authentication information; and
a control unit (230) for determining whether a signal strength of a signal received from a first public base station that is associated with a mobile terminal (110), is less than a first threshold value, for determining, when the signal strength is less than the first threshold value and there is no other public base station with a signal strength that is greater than that of the first public base station, whether to switch to a private base station mapped to the public base station, for performing authentication with the private network (102) using the authentication value, and for releasing the connection with the public station after determining to switch to the private base station and establishing connection with the private base station.

8. The apparatus of claim 7, wherein each private base station is mapped to a public base station having at least a portion of respective coverage areas that are overlapping or adjacent.

9. The apparatus of claim 7, further comprising a radio frequency unit for receiving neighbor base station information periodically broadcasted by the public and private base stations, for transmitting the authentication value to the private network when attempting connection with the private base station, and for exchanging signals with the public and private base stations for establishing a connection.

10. The apparatus of any of claims 7 to 9, wherein the connection manager (245) further comprises means for updating the public network information using the neighbor base station information broadcasted by the public base station.

11. The apparatus of any of claims 7 to 10, wherein the control unit (230) further comprises means for controlling the mobile terminal (110) to determine whether the signal strength of the connected private base station is less than a second threshold value, means for determining to switch to the public network, and means for establishing, after determining to switch to the public network, a connection with a public base station of the public network.

12. The apparatus of any of claim 7 to 11, wherein the control unit (230) further comprises means for controlling the mobile terminal (110) to release, after determining to switch from the private network (102) to the public network (101), the connection with the private network (102) and means for attempting to connect with the public base station having a signal strength greater than other public base stations.

13. The apparatus of claim 7, wherein the control unit (230) further comprises means for controlling the mobile terminal (110) to switch a connection from the public base station to the private base station which is mapped to the public base station in the public network information in response to a network switching command input by a user, and means for controlling the mobile terminal (110) to switch a connection from the private base station to a public base station having a signal strength greater than other public base stations with reference to neighbor base station information of the public network (101).

## Patentansprüche

1. Netzwerkumschaltverfahren in einem mobilen Endgerät (110), wobei das Verfahren Folgendes beinhaltet:
Ermitteln, an einem mobilen Endgerät (110), das mit einem öffentlichen Netzwerk (101) verbunden ist, das keine Authentifizierung erfordert, ob eine Signalstärke eines von einer ersten öffentlichen Basisstation des öffentlichen Netzwerks (101) empfangenen Signals geringer ist als ein erster Schwellenwert;
**dadurch gekennzeichnet, dass**, wenn die Signalstärke geringer ist als der erste Schwellenwert und es keine andere öffentliche Basisstation mit einer Signalstärke gibt, die größer ist als die in der ersten öffentlichen Station, das Verfahren ferner das Bestimmen, ob auf ein privates Netzwerk (102) umgeschaltet werden soll, das Authentifizierung erfordert, mit Bezug auf zuvor gespeicherte öffentliche (101) und private (102) Netzwerkinformationen beinhaltet; und
Herstellen, nach dem Bestimmen, dass auf ein privates Netzwerk (102) umgeschaltet werden soll, einer Verbindung mit einer privaten Basisstation des privaten Netzwerks (102) unter Verwendung eines Authentifizierungswertes, der in den Informationen über das private Netzwerk (102) enthalten ist,
wobei das Herstellen der Verbindung mit der privaten Basisstation Folgendes beinhaltet:
Trennen der Verbindung mit der öffentlichen Basisstation;
Durchführen einer Authentifizierung mit dem privaten Netzwerk (102) unter Verwendung des Authentifizierungswertes; und
Herstellen einer Verbindung mit der privaten Basisstation.

2. Verfahren nach Anspruch 1, wobei die private Basisstation eine Basisstation ist, die auf die öffentliche Basisstation in den Privatnetzinformationen abgebildet sind, die Abbildungen zwischen wenigstens einer öffentlichen Basisstation und wenigstens einer privaten Basisstation beinhalten.

3. Verfahren nach Anspruch 2, wobei wenigstens ein Teil eines Versorgungsbereichs der wenigstens einen privaten Basisstation und wenigstens ein Teil eines Versorgungsbereichs der wenigstens einen öffentlichen Basisstation überlappend oder benachbart sind.

4. Verfahren nach Anspruch 1, das ferner Folgendes beinhaltet:
Ermitteln, ob eine Signalstärke eines von der privaten Basisstation empfangenen Signals geringer ist als ein Schwellenwert, mit Bezug auf Nachbar-Basisstationsinformationen, die von der privaten Basisstation periodisch ausgestrahlt werden;
Bestimmen, wenn die Signalstärke des von der privaten Basisstation empfangenen Signals geringer ist als der zweite Schwellenwert, ob das mobile Endgerät auf das öffentliche Netzwerk (101) umschalten soll; und
Herstellen, nach dem Bestimmen, dass auf das öffentliche Netzwerk (101) umgeschaltet werden soll, einer Verbindung mit einer öffentlichen Basisstation mit einer Signalstärke, die größer ist als in anderen öffentlichen Basisstationen, mit Bezug auf Nachbar-Basisstationsinformationen, die von dem öffentlichen Netzwerk bereitgestellt werden.

5. Verfahren nach Anspruch 4, wobei das Umschalten der Verbindung mit der öffentlichen Basisstation Folgendes beinhaltet:
Trennen der Verbindung mit der privaten Basisstation; und
Empfangen von Nachbar-Basisstationsinformationen, die von dem öffentlichen Netzwerk (101) ausgestrahlt werden.

6. Verfahren nach einem der Ansprüche 1 bis 3, das ferner Folgendes beinhaltet:
Erfassen einer Eingabe eines Netzwerkumschaltbefehls, während das mobile Endgerät (110) mit der öffentlichen Basisstation verbunden ist; und
Umschalten der Verbindung mit der privaten Basisstation als Reaktion auf den Netzwerkumschaltbefehl.

7. Netzwerkumschaltvorrichtung eines mobilen Endgeräts (110), **dadurch gekennzeichnet, dass** die Vorrichtung Folgendes umfasst:
einen Verbindungsmanager (245) zum Verwalten von Informationen über ein öffentliches Netzwerk (101), das keine Authentifizierung erfordert, und ein privates Netzwerk (102), das eine Authentifizierung erfordert, von Abbildungen zwischen wenigstens einer öffentlichen Basisstation des öffentlichen Netzwerks (101) und wenigstens einer privaten Basisstation des privaten Netzwerks (102) und der Authentifizierungsinformationen; und
eine Steuereinheit (230) zum Ermitteln, ob eine Signalstärke eines Signals, das von einer ersten öffentlichen Basisstation empfangen wurde, die mit einem mobilen Endgerät (110) assoziiert ist, geringer ist als ein erster Schwellenwert, um zu bestimmen, wenn die Signalstärke geringer ist als der erste Schwellenwert und es keine andere öffentliche Basisstation mit einer Signalstärke gibt, die größer ist als in der ersten öffentlichen Basisstation, ob auf eine private Basisstation umgeschaltet werden soll, die auf die öffentliche Basisstation abgebildet ist, um eine Authentifizierung mit dem privaten Netzwerk (102) unter Verwendung des Authentifizierungswertes durchzuführen und um die Verbindung mit der öffentlichen Station nach dem Bestimmen zu trennen, dass auf die private Basisstation umgeschaltet werden soll, und um eine Verbindung mit der privaten Basisstation herzustellen.

8. Vorrichtung nach Anspruch 7, wobei jede private Basisstation auf eine öffentliche Basisstation abgebildet ist, die wenigstens einen Teil von jeweiligen Versorgungsbereichen hat, die überlappend oder benachbart sind.

9. Vorrichtung nach Anspruch 7, die ferner eine Funkfrequenzeinheit zum Empfangen von Nachbar-Basisstationsinformationen umfasst, die periodisch von den öffentlichen und den privaten Basisstationen ausgestrahlt werden, um beim Versuch einer Verbindung mit der privaten Basisstation den Authentifizierungswert zum privaten Netzwerk zu senden und um Signale mit der öffentlichen und der privaten Basisstation auszutauschen, um eine Verbindung herzustellen.

10. Vorrichtung nach einem der Ansprüche 7 bis 9, wobei der Verbindungsmanager (245) ferner Mittel zum Aktualisieren der öffentlichen Netzwerkinformationen mit Hilfe der von der öffentlichen Basisstation ausgestrahlten Nachbar-Basisstationinformationen umfasst.

11. Vorrichtung nach einem der Ansprüche 7 bis 10, wobei die Steuereinheit (230) ferner Folgendes umfasst: Mittel zum Steuern des mobilen Endgeräts (110), um zu ermitteln, ob die Signalstärke der angeschlossenen privaten Basisstation geringer ist als ein zweiter Schwellenwert, Mittel, um eine Umschaltung auf das öffentliche Netzwerk zu bestimmen, und Mittel zum Herstellen, nach dem Bestimmen einer Umschaltung auf das öffentliche Netzwerk, einer Verbindung mit einer öffentlichen Basisstation des öffentlichen Netzwerks.

12. Vorrichtung nach einem der Ansprüche 7 bis 11, wobei die Steuereinheit (230) ferner Folgendes umfasst: Mittel zum Steuern des mobilen Endgeräts (110), um nach dem Bestimmen einer Umschaltung von dem privaten Netzwerk (102) auf das öffentliche Netzwerk (101) die Verbindung mit dem privaten Netzwerk (102) zu trennen, und Mittel zum Versuchen einer Verbindung mit der Basisstation, die eine Signalstärke hat, die größer ist als die in anderen öffentlichen Basisstationen.

13. Vorrichtung nach Anspruch 7, wobei die Steuereinheit (230) ferner Folgendes umfasst: Mittel zum Steuern des mobilen Endgeräts (110), als Reaktion auf einen von einem Benutzer eingegebenen Netzwerkumschaltbefehl eine Verbindung von der öffentlichen Basisstation auf die private Basisstation umzuschalten, die auf die öffentliche Basisstation in den öffentlichen Netzwerkinformationen abgebildet ist, und Mittel zum Steuern des mobilen Endgeräts (110), um eine Verbindung von der privaten Basisstation auf eine öffentliche Basisstation, die eine Signalstärke hat, die größer ist als die in anderen öffentlichen Basisstationen, mit Bezug auf Nachbar-Basisstationsinformationen des öffentlichen Netzwerks (101) umzuschalten.

## Revendications

1. Procédé de commutation de réseau pour un terminal mobile (110), le procédé comprenant les opérations consistant à :
au niveau d'un terminal mobile (110) connecté à un réseau public (101) qui ne nécessite aucune authentification, déterminer si une intensité de signal sur un signal reçu à partir d'une première station de base publique du réseau public (101) est inférieure, ou non, à une première valeur-seuil ;
**caractérisé en ce que**, lorsque l'intensité du signal est inférieure à la première valeur-seuil, et qu'il n'existe aucune autre station de base publique présentant une intensité de signal qui est supérieure à celle de la première station publique, le procédé comprend l'opération consistant à déterminer s'il convient, ou non, de commuter vers un réseau privé (102) qui nécessite une authentification, par rapport à des informations précédemment stockées relatives au réseau public (101) et au réseau privé (102) ; et
après avoir déterminé qu'il convient de commuter vers un réseau privé (102), établir une connexion avec une station de base privée du réseau privé (102) en utilisant une valeur d'authentification laquelle est incluse dans les informations relatives au réseau privé (102),
cas dans lequel l'établissement de la connexion avec la station de base privée comprend les opérations consistant à :
libérer la connexion avec la station de base publique ;
effectuer une authentification avec le réseau privé (102) en utilisant la valeur d'authentification ; et
établir une connexion avec la station de base privée.

2. Procédé selon la revendication 1, la station de base privée étant une station de base laquelle est mappée à la station de base publique dans les informations relatives au réseau privé qui englobent des mappages entre au moins une station de base publique et au moins une station de base privée.

3. Procédé selon la revendication 2, au moins une partie d'une zone de couverture de ladite au moins une station de base privée et au moins une partie d'une zone de couverture de ladite au moins une station de base publique étant en chevauchement ou adjacentes.

4. Procédé selon la revendication 1, comprenant en outre les opérations consistant à :
déterminer si une intensité de signal sur un signal reçu à partir de la station de base privée est inférieure à une deuxième valeur-seuil, par rapport à des informations relatives à des stations de base avoisinantes lesquelles sont périodiquement diffusées par la station de base privée ;
lorsque l'intensité de signal sur le signal reçu à partir de la station de base privée est inférieure à la deuxième valeur-seuil, déterminer si le terminal mobile est censé commuter, ou non, vers le réseau public (101) ; et
après avoir déterminé qu'il convient de commuter vers le réseau public (101), établir une connexion avec une station de base publique dont une intensité de signal est supérieure à d'autres stations de base publiques, par rapport à des informations relatives à des stations de base avoisinantes lesquelles sont fournies par le réseau public.

5. Procédé selon la revendication 4, la commutation de la connexion à la station de base publique comprenant les opérations consistant à :
libérer la connexion avec la station de base privée ; et
recevoir des informations relatives à des stations de base avoisinantes lesquelles sont diffusées par le réseau public (101).

6. Procédé selon l'une quelconque des revendications 1 à 3, comprenant en outre les opérations consistant à :
détecter une saisie d'une instruction de commutation de réseau pendant que le terminal mobile (110) est connecté à la station de base publique ; et
commuter la connexion à la station de base privée en réaction à l'instruction de commutation de réseau.

7. Appareil de commutation de réseau pour un terminal mobile (110), **caractérisé en ce que** l'appareil comprend :
un gestionnaire de connexions (245) destiné à gérer des informations concernant un réseau public (101) ne nécessitant aucune authentification et un réseau privé (102) nécessitant une authentification, des mappages entre au moins une station de base publique du réseau public (101) et au moins une station de base privée du réseau privé (102), et les informations d'authentification ; et
une unité de commande (230) pour déterminer si une intensité de signal sur un signal reçu à partir d'une première station de base publique qui est associée à un terminal mobile (110), est inférieure à une première valeur-seuil, pour déterminer, lorsque l'intensité de signal est inférieure à la première valeur-seuil et qu'il n'existe aucune autre station de base publique dont l'intensité de signal est supérieure à celle de la première station de base publique, qu'il convient ou non de commuter vers une station de base privée mappée à la station de base publique, pour effectuer l'authentification avec le réseau privé (102) grâce à la valeur d'authentification, et pour libérer la connexion à la station publique après avoir déterminé qu'il convient de commuter vers la station de base privée et établir une connexion avec la station de base privée.

8. Appareil selon la revendication 7, chaque station de base privée étant mappée à une station de base publique possédant au moins une portion des zones de couverture respectives qui sont en chevauchement ou adjacentes.

9. Appareil selon la revendication 7, comprenant en outre une unité à radiofréquence pour recevoir des informations relatives à des stations de base avoisinantes qui sont périodiquement diffusées par les stations de base privées et publiques, pour transmettre la valeur d'authentification au réseau privé lors de la tentative de connexion à la station de base privée, et pour échanger des signaux avec les stations de base publiques et privées en vue d'établir une connexion.

10. Appareil selon l'une quelconque des revendications 7 à 9, le gestionnaire de connexions (245) comprenant en outre des moyens pour mettre à jour les informations relatives au réseau public en utilisant les informations relatives aux stations de base avoisinantes diffusées par la station de base publique.

11. Appareil selon l'une quelconque des revendications 7 à 10, l'unité de commande (230) comprenant en outre des moyens pour piloter le terminal mobile (110) afin de déterminer si l'intensité de signal de la station de base privée connectée est inférieure à une deuxième valeur-seuil, des moyens pour déterminer s'il convient de commuter vers le réseau public et des moyens pour établir - après avoir déterminé qu'il convient de commuter vers le réseau public - une connexion avec la station de base publique du réseau public.

12. Appareil selon l'une quelconque des revendications 7 à 11, l'unité de commande (230) comprenant en outre des moyens pour piloter le terminal mobile (110) afin de libérer - après avoir déterminé qu'il convient de commuter à partir du réseau privé (102) vers le réseau public (101) - la connexion au réseau privé (102) et des moyens pour tenter de faire une connexion avec la station de base publique dont une intensité de signal est supérieure à d'autres stations de base publiques.

13. Appareil selon la revendication 7, l'unité de commande (230) comprenant en outre des moyens pour piloter le terminal mobile (110) afin de commuter une connexion à partir de la station de base publique vers la station de base privée qui est mappée à la station de base publique dans les informations relatives au réseau public, en réaction à une saisie faite par un utilisateur d'une instruction de commutation de réseau, et des moyens pour piloter le terminal mobile (110) afin de commuter une connexion à partir de la station de base privée vers une station de base publique dont une intensité de signal est supérieure à d'autres stations de base publiques par rapport aux informations relatives aux stations de base avoisinantes du réseau public (101).
